# EUROPEAN PATENT APPLICATION

(11) **EP 4 775 428 A1**
(43) Date of publication of application: **15.07.2026**
(21) Application number: 24862531.1
(22) Date of filing: 09.08.2024
(51) Int. Cl.: B60K 35/21, G09G 5/00, G09G 5/37, G09G 5/373

(54) **DISPLAY CONTROL DEVICE FOR VEHICLE, DISPLAY CONTROL METHOD FOR VEHICLE, AND PROGRAM**

(30) Priority: 05.09.2023 JP 2023143815
(71) Applicant: TOYOTA JIDOSHA KABUSHIKI KAISHA, Toyota-Shi, Aichi-Ken 471-8571 (JP)
(72) Inventor: TSUJINO, Miki, Toyota-shi, Aichi 471-8571 (JP); HALL, Matthew Corey, Tokyo 103-0022 (JP); O'SHANAHAN, Lorcan, Tokyo 103-0022 (JP); KLAROWSKI, Piotr, Tokyo 103-0022 (JP); VAN DER WALT, MW, Tokyo 103-0022 (JP); PARSON, Stuart, Tokyo 103-0022 (JP); PARK, Stephanie, Tokyo 103-0022 (JP)
(74) Representative: J A Kemp LLP
(86) International application number: PCT/JP2024/028803
(87) International publication number: WO 2025/052877

(57) **Abstract**

A vehicle display control device displays, at a display area provided in surroundings of a driver's seat, an image indicating peripheral circumstances of a host vehicle as if viewed from a virtual viewpoint configured in accordance with a driving mode thereof, for a plurality of preset driving modes, and has a dynamic display unit that, in a case in which the driving mode of the host vehicle changes, gradually changes the image by changing the virtual viewpoint over the course of a predetermined time period.

## Description

### Technical Field

The present disclosure relates to a vehicle display control device, a vehicle display control method, and a program.

### Background Art

U.S. Patent Publication No. 2017/0136878 discloses displaying graphics of a driving assistance system in a first display mode in a case in which an automobile is operating in a first driving mode, and when operating in a second driving mode that is more highly automated than the first driving mode, displaying graphics of the driving assistance system in a second display mode that is displayed from a different perspective than in the first display mode.

### SUMMARY OF THE INVENTION

### Problem to be Solved by the Invention

As described in U.S. Patent Publication No. 2017/0136878, in recent years, there have been attempts to display graphics in plural display modes corresponding to the driving mode of a vehicle, and to cause the driver to recognize the driving mode during actual operation from the display mode. However, in a case of changing the display mode at the same time as the driving mode is changed in a vehicle system, there are cases in which it may be difficult for a vehicle occupant to recognize that the driving mode has changed simply by glancing at a display.

An object of the present disclosure is to provide a vehicle display control device, a vehicle display control method, and a program that display a change in a vehicle's driving mode in a manner that is easy for a vehicle occupant to recognize.

### Means for Solving the Problem

A vehicle display control device according to a first aspect of the present disclosure is a vehicle display control device that displays, at a display area provided in surroundings of a driver's seat, an image indicating peripheral circumstances of a host vehicle as if viewed from a virtual viewpoint configured in accordance with a driving mode thereof, for plural preset driving modes, and that has a dynamic display unit that, in a case in which the driving mode of the host vehicle changes, gradually changes the image by changing the virtual viewpoint over the course of a predetermined time period.

The vehicle display control device according to the first aspect of the present disclosure displays, at a display area provided in the surroundings of a driver's seat, an image indicating the peripheral circumstances of a host vehicle. Further, the vehicle display control device displays, at the display area, the image showing the peripheral circumstances of the host vehicle as if viewed from a virtual viewpoint that is configured in accordance with a driving mode. As a result, the driver in the driver's seat can recognize the current driving mode of the host vehicle based on differences in the virtual viewpoint of the image.

Here, in a case in which the driving mode of the host vehicle changes, the vehicle display control device gradually changes the image by changing the virtual viewpoint over the course of a predetermined time period. As a result, it becomes easier for the driver to notice the change in the image, and the change in driving mode can be displayed in a manner that is easy for a vehicle occupant to recognize.

A vehicle display control device according to a second aspect of the present disclosure is the first aspect, in which the virtual viewpoint is set by configuring a viewpoint corresponding to the driving mode in a virtual space, and the virtual viewpoint is changed by at least one of moving coordinates of the virtual viewpoint, or rotating an orientation of the virtual viewpoint, in the virtual space.

In the vehicle display control device according to the second aspect of the present disclosure, in a case in which the driving mode of the vehicle changes, the image can be changed by moving the coordinates of the virtual viewpoint in the virtual space, thereby allowing a vehicle occupant to recognize that the driving mode has changed. Further, in the vehicle display control device, the image can be changed by rotating the orientation of the virtual viewpoint in the virtual space, thereby allowing a vehicle occupant to recognize that the driving mode has changed.

A vehicle display control device according to a third aspect of the present disclosure is the first aspect or the second aspect, in which a first image indicating the host vehicle is included in the image, and the dynamic display unit gradually changes a display range of surroundings of the first image in conjunction with a change in the virtual viewpoint.

In the vehicle display control device according to the third aspect of the present disclosure, in the image displayed in the display area, a display range of the surroundings of the first image showing the host vehicle changes in conjunction with a change in the virtual viewpoint in the virtual space. As a result, it is possible to secure space in a predetermined range of the display area in accordance with, for example, the driving mode of the host vehicle. As a result, it is possible to efficiently utilize the limited size of the display area and ensure sufficient space for displaying information.

A vehicle display control device according to a fourth aspect of the present disclosure is the first aspect or the second aspect, in which the dynamic display unit initiates a change in the virtual viewpoint after a predetermined time period elapses since the driving mode changes in the host vehicle.

In the vehicle display control device according to the fourth aspect of the present disclosure, a change in the virtual viewpoint is initiated after a predetermined time period elapses since the driving mode of the host vehicle changes. Therefore, since, in situations in which the driving mode changes in a short time period, the viewpoint of the image can be kept unchanged, in a case in which the driving mode is frequently changed, the driver is inhibited from feeling annoyance when looking at the display area.

A vehicle display control device according to a fifth aspect of the present disclosure is the first aspect or the second aspect, in which the dynamic display unit displays the image without changing the virtual viewpoint in a case in which it is determined, based on environmental information of the host vehicle, that a length of a section that can be traveled in a driving mode that has been changed is less than a threshold value.

In the vehicle display control device according to the fifth aspect of the present disclosure, in a case in which it is determined that the length of the section that can be traveled in the changed driving mode is less than a threshold value, the image is displayed without changing the virtual viewpoint. Therefore, since, in a case in which it is predicted that the driving mode will change in a short section, the image can be displayed without changing the viewpoint, in a case in which the driving mode is expected to change frequently, the driver is inhibited from feeling annoyance when looking at the display area.

A vehicle display control device according to a sixth aspect of the present disclosure is the first aspect or the second aspect, in which the plural preset driving modes include: a first driving mode that is not associated with a travel assistance function; and a second driving mode and a third driving mode that are associated with at least one travel assistance function, and the dynamic display unit changes the virtual viewpoint over the course of a first time period in a case in which the host vehicle changes from the first driving mode to the second driving mode, and changes the virtual viewpoint over the course of a second time period that is shorter than the first time period in a case in which the host vehicle changes from the second driving mode to the third driving mode.

Incidentally, in a case in which the driving mode of the host vehicle changes from the first driving mode that is not associated with a travel assistance function, to a second driving mode that is associated with a travel assistance function, there is a significant change in what is demanded of a driver in the driver's seat. Further, in a case in which there is a change from the second driving mode that is associated with at least one travel assistance function to a third driving mode that is similarly associated with a travel assistance function, in many cases, the demands on the driver are not as large as in the former case.

Therefore, in the vehicle display control device according to the sixth aspect, the time taken for changing the virtual viewpoint in a case of changing from the first driving mode to the second driving mode is set longer than the time taken for changing from the second driving mode to the third driving mode. As a result, display is possible in a manner such that the greater the change in what is demanded of the driver in conjunction with the change in driving mode, the more easily the occupant can recognize that the driving mode has changed.

A vehicle display control device according to a seventh aspect of the present disclosure is the sixth aspect, in which the dynamic display unit moves the virtual viewpoint along a curved trajectory in a case in which the host vehicle changes from the first driving mode to the second driving mode.

In the vehicle display control device according to the seventh aspect of the present disclosure, in a case in which there is a change from the first driving mode that is not associated with a travel assistance function, to the second driving mode that is associated with a travel assistance function, the virtual viewpoint is moved along a curved trajectory. As a result, the viewpoint of the image can be dynamically changed, and display is possible in a manner such that the greater the change in what is demanded of the driver in conjunction with the change in driving mode, the more easily the occupant can recognize that the driving mode has changed.

A vehicle display control device according to an eighth aspect of the present disclosure is the seventh aspect, in which a first virtual viewpoint corresponding to the first driving mode and a second virtual viewpoint corresponding to the second driving mode are configured, and the dynamic display unit is configured such that, by moving the virtual viewpoint along an arcuate trajectory directed rearward and to a lower side in a case in which the host vehicle changes from the first driving mode to the second driving mode, the virtual viewpoint arrives at the second virtual viewpoint by moving forward after having moved further rearward than the second viewpoint from the first virtual viewpoint.

In the vehicle display control device according to the eighth aspect of the present disclosure, in a case in which the host vehicle changes from the first driving mode to the second driving mode, the coordinates are moved along a curved trajectory that describes an arc. Therefore, the configuration is such that by moving the viewpoint of the image from the position of the first virtual viewpoint to a coordinate position rearward of the second virtual viewpoint, the viewpoint is pulled significantly to the rear relative to the host vehicle, and then, the viewpoint moves forward so as to approach the host vehicle and arrives at the second virtual viewpoint. As a result, the viewpoint of the image can be dynamically changed, and display is possible in a manner such that the greater the change in what is demanded of the driver in conjunction with the change in driving mode, the more easily the occupant can recognize that the driving mode has changed.

A vehicle display control device according to a ninth aspect of the present disclosure is the eighth aspect, in which the dynamic display unit makes a speed of forward movement of the virtual viewpoint slower than a speed of rearward movement thereof.

In the vehicle display control device according to the ninth aspect of the present disclosure, by increasing the speed of movement of the virtual viewpoint at the initial stage of the image change, it can be made easier for the driver to notice the image change. Further, after the driver's line of sight is directed toward the image in the display area-that is, in the latter stage of the image change-by decreasing the movement speed of the virtual viewpoint, the driver is inhibited from from feeling annoyance when looking at the display area.

A vehicle display control device according to a tenth aspect of the present disclosure is the sixth aspect, in which the dynamic display unit moves the virtual viewpoint along a straight-line trajectory in a case in which the host vehicle changes from the first driving mode to the second driving mode.

In the vehicle display control device according to the tenth aspect of the present disclosure, in a case in which there is a change from the second driving mode that is associated with at least one travel assistance function to a third driving mode that is similarly associated with a travel assistance function, the virtual viewpoint is moved along a straight-line trajectory. As a result, the viewpoint of the image is changed such that it moves along a straight line, enabling the sense of dynamism to be subdued as compared to a case in which the virtual viewpoint moves along a curved trajectory. As a result, the driver can intuitively recognize that the change in what is demanded of the driver in conjunction with the change in driving mode is relatively small.

A vehicle display control device according to an eleventh aspect of the present disclosure is the sixth aspect, in which the second driving mode is associated with a travel assistance function that is at least one of acceleration/deceleration or steering, and the dynamic display unit changes the image so as to expand a display range at a forward side of a first image in a case in which the host vehicle changes to the second driving mode.

In the vehicle display control device according to the eleventh aspect of the present disclosure, in a case in which the driving mode of the host vehicle is changed to a second driving mode that is associated with a travel assistance function that is at least one of acceleration/deceleration or steering, the image is changed so that the display range at the front side of the first image is expanded. Travel assistance related to acceleration/deceleration and steering is closely related to the direction of travel of the host vehicle. Therefore, by widening the display range at the front side of the first image showing the host vehicle in the display area, the driver can intuitively recognize that the driving mode of the host vehicle has changed to the second driving mode, and further, space for displaying information related to the second driving mode can be secured in the display range at the front side of the first image.

A vehicle display control device according to a twelfth aspect of the present disclosure is the sixth aspect, in which the third driving mode is associated with a travel assistance function that controls an output of a power unit and improves travel efficiency of the host vehicle as compared to during travel in the second driving mode, a first image indicating the host vehicle is included in the image, and in a case in which the host vehicle changes to the third driving mode, the dynamic display unit changes the image such that a display range expands in a predetermined direction of surroundings of the first image, and displays a second image identifying the third driving mode at a side in the predetermined direction of surroundings of the first image.

In the vehicle display control device according to the twelfth aspect of the present disclosure, in a case in which the driving mode of the host vehicle is changed to the third driving mode that is associated with a travel assistance function that improves the travel efficiency of the host vehicle as compared to during travel in the second driving mode, the image in the display area is changed such that the display range in a predetermined direction of the surroundings of the first image is expanded. Further, a second image indicating that the driving mode is the third driving mode is displayed at the side in the predetermined direction of the surroundings of the first image. As a result, it is possible to display the second image indicating that the driving mode is the third driving mode in the surroundings of the first image, making it easier for the driver to recognize the change to the third driving mode.

A vehicle display control device according to a thirteenth aspect of the present disclosure is the first aspect or the second aspect, in which the virtual viewpoint that has been configured for a driving mode having a relatively high automatic driving level is set at a viewpoint that is as if viewed with a more upward orientation than the virtual viewpoint that has been configured for another driving mode having a relatively low automatic driving level.

In the vehicle display control device according to the thirteenth aspect of the present disclosure, in a case of traveling in a driving mode having a relatively high automatic driving level, in order to display to the user that the sensors are broadly detecting the peripheral circumstances, it is desirable to display as many details of the acquired peripheral circumstances as possible to the driver. However, simply changing the display magnification of an image makes it difficult for information such as targets in the image to be seen. Here, with the virtual viewpoint set for a driving mode having a relatively high automatic driving level, by using a virtual viewpoint that is as if viewed with a further upward orientation, even targets further ahead of the host vehicle can be displayed in the display area. In this way, by expanding the display range of the surroundings of the vehicle in accordance with an increase in the automatic driving level, a driver can intuitively recognize the increased automatic driving level.

A vehicle display control device according to a fourteenth aspect of the present disclosure is the first aspect or the second aspect, in which the virtual viewpoint that has been configured for a driving mode having a relatively high automatic driving level is set at viewpoint that is as if viewed from a lower position than the virtual viewpoint that has been configured for another driving mode having a relatively low automatic driving level.

In the vehicle display control device according to the fourteenth aspect of the present disclosure, with the virtual viewpoint set for a driving mode having a relatively high automatic driving level, by using a virtual viewpoint that is as if viewed from a lower position, even targets further ahead of the host vehicle can be displayed in the display area. In this way, by expanding the display range of the surroundings of the vehicle in accordance with an increase in the automatic driving level, a driver can intuitively recognize the increased automatic driving level.

A vehicle display control device according to a fifteenth aspect of the present disclosure is a method of vehicle display control that displays, at a display area provided in surroundings of a driver's seat, an image indicating peripheral circumstances of a host vehicle as if viewed from a virtual viewpoint configured in accordance with a driving mode thereof, for plural preset driving modes, the method including: in a case in which the driving mode of the host vehicle changes, gradually changing the image by changing the virtual viewpoint over the course of a predetermined time period.

A program according to a sixteenth aspect of the present disclosure is a program that causes a computer to execute processing that displays, at a display area provided in surroundings of a driver's seat, an image indicating peripheral circumstances of a host vehicle as if viewed from a virtual viewpoint configured in accordance with a driving mode thereof, for plural preset driving modes, the processing including: in a case in which the driving mode of the host vehicle changes, gradually changing the image by changing the virtual viewpoint over the course of a predetermined time period.

### Effect of the Invention

As explained above, according to the vehicle display control device, the vehicle display control method, and the program according to the present disclosure, a change in vehicle driving mode can be displayed in a manner that is easily recognizable to a vehicle occupant.

### Brief Explanation of the Drawings

Fig. 1 is a schematic diagram of a front part of a vehicle cabin interior of a vehicle to which a vehicle display control device according to an embodiment has been applied, as viewed from a vehicle rear side.
Fig. 2 is a diagram showing a display area of a meter display as an example of a display area in an embodiment.
Fig. 3 is a block diagram showing an example of the hardware configuration of a vehicle display control device according to an embodiment.
Fig. 4 is a block diagram illustrating the functional configuration of a vehicle display control device according to an embodiment.
Fig. 5 is a diagram showing positions of virtual viewpoints set in a virtual space for plural preset driving modes.
Fig. 6 is an example of a display of the peripheral circumstances of a host vehicle when a first driving mode is in operation, as if viewed from a first virtual viewpoint.
Fig. 7 is an example of a display of the peripheral circumstances of a host vehicle when a second driving mode is in operation, as if viewed from a second virtual viewpoint.
Fig. 8 is an example of a display of the peripheral circumstances of a host vehicle when a third driving mode is in operation, as if viewed from a third virtual viewpoint.
Fig. 9 is a diagram showing how an image gradually changes over time owing to changes in the virtual viewpoint in a case in which the driving mode changes from the first driving mode to the second driving mode.
Fig. 10 is a diagram showing how an image gradually changes over time owing to changes in the virtual viewpoint in a case in which the driving mode changes from the second driving mode to the third driving mode.
Fig. 11 is a diagram showing how an image gradually changes over time owing to changes in the virtual viewpoint in a case in which a warning is displayed by a fourth driving mode while the second driving mode is in operation as the driving mode.
Fig. 12 is a flowchart showing an example of a flow of display processing according to an embodiment.
Fig. 13 is a variant example according to an embodiment, showing an example of a display in which a target image showing a vehicle warranting attention is enlarged and displayed for a fixed period of time, and showing how the image gradually changes over time owing to changes in the virtual viewpoint.
Fig. 14 is a variant example according to an embodiment, being an example of changing a display range while keeping the virtual viewpoint fixed by changing the angle of view of the virtual viewpoint over a predetermined time period.

### Best Mode for Carrying Out the Invention

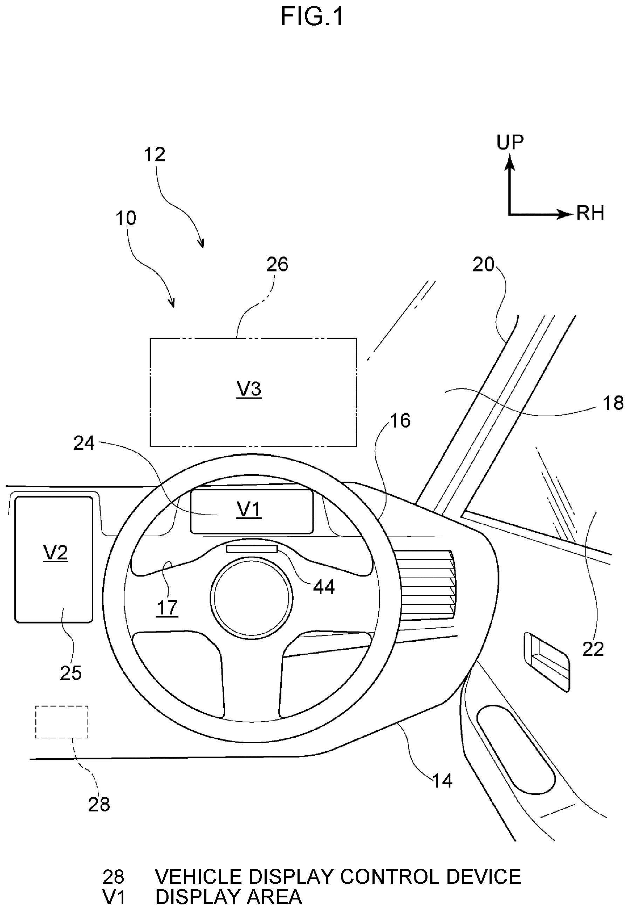

A vehicle display control system 10 including a vehicle display control device 28 according to an embodiment is explained with reference to the drawings. In addition, the arrow UP in Fig. 1 indicates the upper side in the vertical direction of the vehicle, and the arrow RH indicates the right side in the width direction of the vehicle. In the following description, up and down directions and left and right directions refer to the up-down direction in the vertical direction of the vehicle and the left-right direction in the width direction of the vehicle, respectively.

As shown in Fig. 1, an instrument panel 14 is provided at the front of a vehicle cabin interior of a vehicle 12. The instrument panel 14 extends in the vehicle width direction, and a steering wheel 16 is provided at the vehicle right side of the instrument panel 14. That is, in the present embodiment, as an example, a right-hand drive vehicle is used in which the steering wheel 16 is provided on the right side, and the driver's seat is located at the right side of the vehicle. However, there is no limitation to this, and application may be made to a vehicle in which the driver's seat is located at the left side of the vehicle.

A windshield glass 18 is provided at a front end part of the instrument panel 14. The windshield glass 18 extends in the vehicle vertical direction and the vehicle width direction, and separates the vehicle cabin interior from the vehicle exterior.

The vehicle right side end part of the windshield glass 18 is fixed to a front pillar 20 at the right side of the vehicle. The front pillar 20 extends in the vehicle vertical direction, and the windshield glass 18 is fixed to an inner side end part of the front pillar 20 in the vehicle width direction. Further, a front end part of a front side window 22 is fixed to an outer side end part of the front pillar 20 in the vehicle width direction. Here, the vehicle left side end part of the windshield glass 18 is fixed to a front pillar at the left side of the vehicle, which is not shown in the drawings.

Here, the instrument panel 14 is provided with a first display unit 24 having an image display area V1. The first display unit 24 is configured by a meter display provided at the right side of the instrument panel 14, at a vehicle front side of the driver's seat. The first display unit 24 is connected to various meter devices installed in the vehicle 12, and is provided at a position within the driver's field of vision in a state in which the driver's line of sight is directed ahead of the vehicle.

The instrument panel 14 is provided with a second display unit 25 having an image display area V1. The second display unit 25 is configured by a center display disposed in a central part of the instrument panel 14 in the vehicle width direction.

The windshield glass 18 is provided with a third display unit 26 having an image display area V3. The third display unit 26 is configured above the first display unit 24 and is configured by a projection surface onto which a head-up display device 46 serving as a display device is projected. Specifically, a head-up display device 46 capable of projecting an image is provided at a vehicle front side of the instrument panel 14, and this head-up display device 46 is configured to project an image onto the third display unit 26 of the windshield glass 18. That is, the third display unit 26 is a part of the windshield glass 18 that serves as a projection surface for the head-up display device 46.

Here, the vehicle 12 is provided with a vehicle display control device 28 that configures the vehicle display control system 10. The vehicle display control device 28 of the present embodiment is, for example, an electronic control unit (ECU) that performs various controls. Further, the vehicle display control device 28 according to the present embodiment is configured such that, for plural pre-set driving modes, an image showing the peripheral circumstances of the host vehicle as if viewed from a virtual viewpoint set according to the driving mode is displayed in at least one of display area V1, display area V2 and display area V3 in the surroundings of the driver's seat.

Further, the vehicle display control device 28 is configured so as to gradually change the image displayed in the display area when the driving mode of the host vehicle changes, by changing the virtual viewpoint over a predetermined time period.

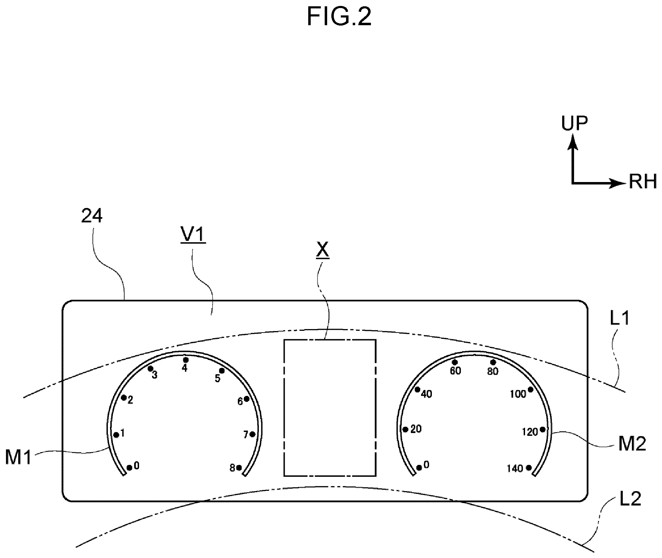

In the following, as an example, a case in which an image is displayed at the first display unit 24 of the vehicle 12 is explained. Here, Fig. 2 shows the display area V1 of the first display section 24.

The vehicle display control device 28 displays an image showing the peripheral circumstances of the vehicle 12 in an area X that is a part of the display area V1. The area X is an area that the driver in the driver's seat can see through the opening 17 of the steering wheel 16. Specifically, as shown in Fig. 2, the center of the area that is visible between an upper edge line L1 and a lower edge line L2 of the opening 17 of the steering wheel 16 is the area X. At the left and right of the area X, meter displays M1 and M2 showing meters of measuring instruments of the vehicle 12 are displayed.

### (Hardware Configuration of Vehicle Display Control Device 28)

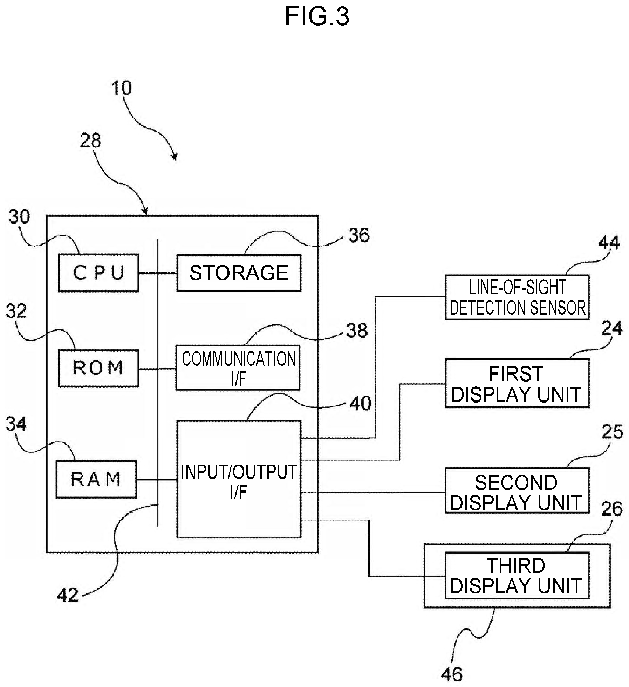

As is shown in Fig. 3, the vehicle display control device 28 includes a central processing unit (CPU: processor) 30, read-only memory (ROM) 32, random access memory (RAM) 34, storage 36, a communication interface (communication I/F) 38, and an input/output interface (input/output I/F) 40. These respective configurations are intercommunicably connected via a bus 42.

The CPU 30 is a central computation processing unit that executes various programs and controls the respective units. Namely, the CPU 30 reads a program from the ROM 32 or the storage 36, and executes the program using the RAM 34 as a workspace. Further, the CPU 30 performs control of the respective configurations described above and various types of processing in accordance with programs recorded in the ROM 32 or the storage 36.

The ROM 32 stores various programs and various data. The RAM 34 temporarily stores programs and data as a workspace. The storage 36 is configured by a hard disk drive (HDD) or a solid state drive (SSD), and is a non-transitory storage medium that holds various programs including an operating system, and various data. In the present embodiment, the ROM 32 or the storage 36 stores a display program for performing display processing and the like.

The communication interface 38 is an interface through which the vehicle display control device 28 communicates with a server and other devices, and uses standards such as a controller area network (CAN), Ethernet (registered trademark), long term evolution (LTE), fiber distributed data interface (FDDI), and Wi-Fi (registered trademark).

The input/output interface 40 is connected to a line-of-sight detection sensor 44, the first display unit 24, the second display unit 25, and the head-up display device 46. Further, an image is projected onto the third display unit 26 by the head-up display device 46.

The line-of-sight detection sensor 44 is provided on the steering wheel 16 and is disposed so as to face the face of the occupant (driver) seated in the driver's seat. Further, the line-of-sight detection sensor 44 detects the direction of the occupant's gaze by recognizing the eyes of the occupant using principles such as the corneal reflex method and the scleral reflex method. The configuration may be such that line-of-sight detection sensor 44 is provided at the instrument panel 14.

### (Functional Configuration of Vehicle Display Control Device 28)

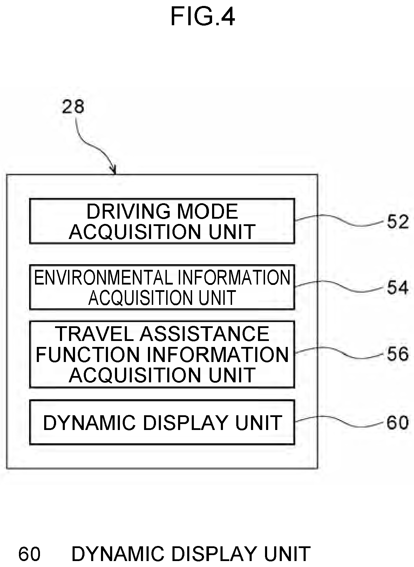

The vehicle display control device 28 implements various functions using the above-described hardware resources. The functional configuration implemented by the vehicle display control device 28 is described below with reference to Fig. 4.

As shown in Fig. 4, the vehicle display control device 28 includes, as functional configuration, a driving mode acquisition unit 52, an environmental information acquisition unit 54, a travel assistance function information acquisition unit 56, and a dynamic display unit 60. These respective functional configurations are realized by the CPU 30 reading-out and executing programs that are stored in the ROM 32 and/or the storage 36.

The driving mode acquisition unit 52 acquires the driving mode of the vehicle 12. The vehicle 12 of the present embodiment has first to fourth driving modes as plural preset driving modes. The first driving mode is a driving mode in which the driver performs all operations, and is also called a manual driving mode. This first driving mode is not associated with any travel assistance functions of the vehicle 12 because the driver performs almost all operations.

The second driving mode is a driving mode in which at least some operations are performed automatically, and is included among automatic driving modes associated with at least one travel assistance function. It should be noted that the automatic driving referred to here is not limited to so-called level 3 or higher automatic driving, but also includes so-called level 2 or lower driving assistance, and the same applies to the following description. In the example of the present embodiment, the second driving mode is an adaptive cruise control (ACC) mode. This ACC mode is associated with a travel assistance function that performs tracking travel by automatically accelerating and decelerating while maintaining a distance from a preceding vehicle within preset vehicle speeds. Further, the second driving mode may also include a hands-on function, which is a travel assistance function that provides steering assistance only in a state in which the occupant is gripping the steering wheel. Furthermore, the second driving mode may also include a hands-off function, which is a travel assistance function that assists with acceleration/deceleration and steering even if the occupant takes their hands off the steering wheel as long as they are paying attention to the area ahead of the vehicle. The second driving mode is not limited to the above-mentioned assistance functions, and may be a driving mode associated with at least one of the travel assistance functions of acceleration/deceleration and steering.

The third driving mode is a driving mode in which at least some operations are performed automatically, and is included among automatic driving modes associated with at least one travel assistance function. In the example of the present embodiment, the third driving mode is an ECO-ACC mode. The ECO-ACC mode is associated with a travel assistance function that controls the output of the power unit and improves the travel efficiency of the host vehicle compared to when the host vehicle is traveling in the second driving mode. That is, the ECO-ACC mode is a driving mode that improves the actual fuel efficiency of fuel and electricity while maintaining the travel assistance provided by the ACC mode. For example, in the ECO-ACC mode, the travel efficiency may be improved by automatically performing pulse-and-glide travel, which involves travel by repeated acceleration and coasting. Further, for example, the travel efficiency may be improved by making acceleration when taking off and deceleration when stopping more gradual than in the normal ACC mode, and the travel efficiency may be improved by automatically performing an engine switching-off operation when the vehicle is stopped.

The fourth driving mode is a driving mode in which a warning is provided to the driver based on an object detection result with respect to a predetermined direction in the surroundings of the vehicle 12. In the example of the present embodiment, the fourth driving mode is a blind spot monitor (BSM) mode. This BSM mode has the function of warning the driver in a case in which a target approaching from the rear side of the vehicle 12 is detected. The BSM mode is activated by a predetermined condition being satisfied during operation of each of the above-described driving modes.

If the automatic driving levels of the respective driving modes are divided into the following stages, the first driving mode corresponds to level 0 autonomous travel. The second driving mode and the third driving mode correspond to level 1 autonomous travel.

### (Automatic Driving Levels)

Level 0: the driver performs all operations (acceleration, steering, braking).
Level 1: the system performs either acceleration, steering, or braking.
Level 2: the system performs plural operations among acceleration, steering, and braking.
Level 3: the system performs all acceleration, steering, and braking, but the driver responds when there is a request from system.
Level 4 and above: the system performs all acceleration, steering, and braking, and the driver is not involved.

The environmental information acquisition unit 54 acquires environmental information that indicates the peripheral circumstances of the vehicle 12 (host vehicle). Specifically, the vehicle 12 is provided with plural sensors capable of detecting the peripheral circumstances, and the information detected by these sensors is acquired as environmental information.

The environmental information also includes map information for the surroundings of the vehicle 12. The vehicle 12 is provided with a GPS receiver for determining the current location, and the environmental information acquisition unit 54 refers to the vehicle's position information and map data stored in an external server and/or the storage 36 and acquires map information for the surroundings of the vehicle 12.

The travel assistance function information acquisition unit 56 acquires information regarding travel assistance functions that are in operation. Specifically, signals may be acquired from actuators such as a steering actuator, an accelerator actuator, and a brake actuator (not shown). A steering actuator performs steering of the vehicle 12. An accelerator actuator performs acceleration of the vehicle 12. Further, a brake actuator performs deceleration of the vehicle 12.

For example, in a case in which steering of the vehicle 12 is performed by a steering actuator, the travel assistance function information acquisition unit 56 determines that the travel assistance function for steering the vehicle 12 is in operation by acquiring information related to the travel assistance functions.

Further, for example, in a case in which acceleration of the vehicle 12 is being performed by the accelerator actuator, the travel assistance function information acquisition unit 56 determines that the travel assistance function for accelerating the vehicle 12 is in operation by acquiring information related to the travel assistance functions. Furthermore, in a case in which deceleration of the vehicle 12 is being performed by the brake actuator, the travel assistance function information acquisition unit 56 determines that the travel assistance function for decelerating the vehicle 12 is in operation by acquiring information related to the travel assistance functions.

The dynamic display unit 60 displays an image showing the peripheral circumstances of the host vehicle in a display area provided in the surroundings of the driver's seat. Here, the image showing the peripheral circumstances of the host vehicle is an image that is as if viewed from a virtual viewpoint set according to the driving mode.

The virtual viewpoint is set by setting a viewpoint in a virtual space in accordance with the driving mode. In one example of the present embodiment, a virtual viewpoint is set in a three-dimensional virtual space having the position of the vehicle 12 (host vehicle) as an origin point O. This virtual viewpoint can be defined by viewpoint coordinates and a viewpoint angle (orientation) in the virtual space.

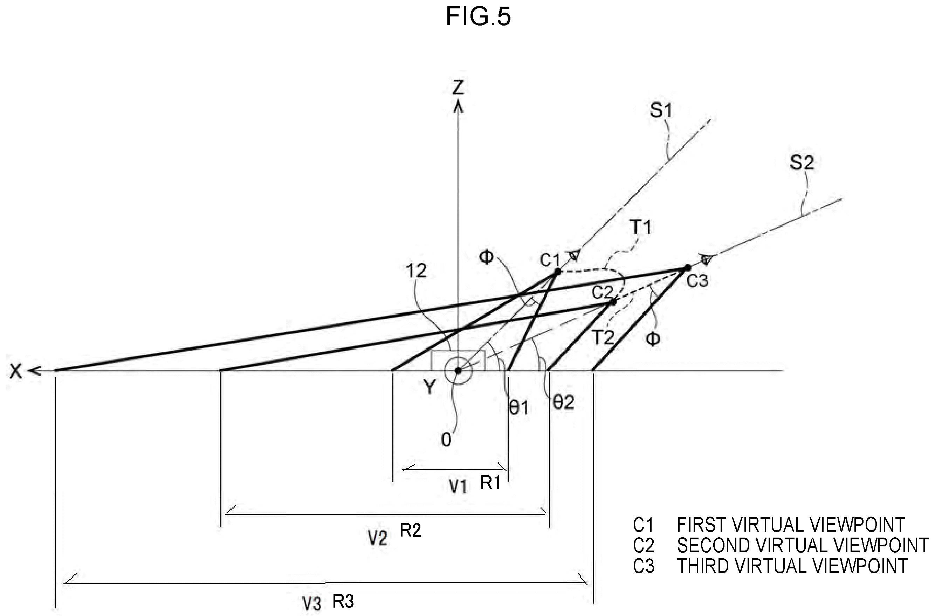

Fig. 5 shows an example of first to third virtual viewpoints C1 to C3 set for the respective driving modes of the vehicle 12. The virtual coordinates of the virtual viewpoints C1 to C3 are three-dimensional coordinates with the vehicle front-rear direction (travel direction) of the vehicle 12 as the X-axis, the vehicle width direction as the Y-axis, and the vehicle vertical direction as the Z-axis. The viewpoint angle can be expressed as a set of rotation angles (roll, pitch, and yaw angles) around each axis. Accordingly, the dynamic display unit 60 generates an image showing the peripheral circumstances of the vehicle 12, based on the assumption that the surroundings of the vehicle 12 are viewed at a specific viewpoint angle from specific viewpoint coordinates in the virtual space, and displays the image in the display area.

The first virtual viewpoint C1 is a virtual viewpoint set for the first driving mode (manual driving mode). The first virtual viewpoint C1 is a viewpoint from which the host vehicle 12 is viewed from a high position diagonally rearward. As an example, the viewpoint angle of the first virtual viewpoint C1 coincides with the direction of a line segment S1 passing through the viewpoint coordinates of the first virtual viewpoint C1 and the origin point O, with the largest rotation angle (pitch angle) θ1 around the Y axis. The dynamic display unit 60 generates an image having a range R1 visible from the first virtual viewpoint C1 at a predetermined angle of view φ, and displays the image in a display area as an image showing the peripheral circumstances of the vehicle 12.

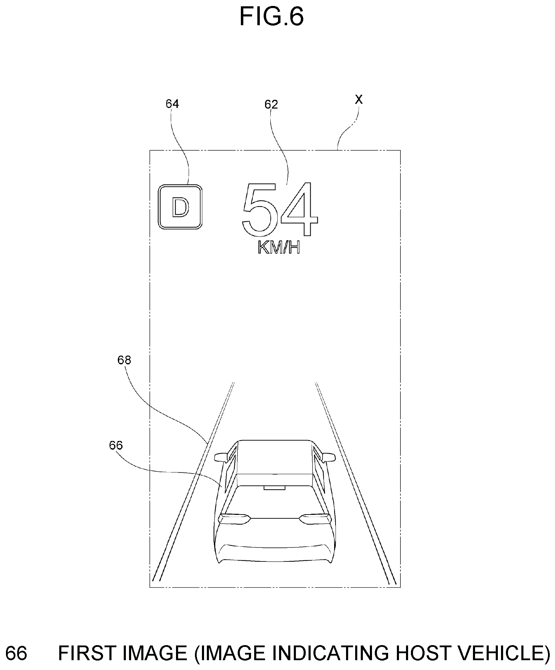

Fig. 6 is a display example of an image showing the peripheral circumstances of the vehicle 12 as seen from the first virtual viewpoint C1. As shown in this drawing, the dynamic display unit 60 displays a road image 68 indicating the lane in which the vehicle 12 is traveling and the like, around a first image 66 indicating the vehicle 12. Further, above the road image 68, an image 62 indicating the travel speed of the vehicle 12 and an image 64 indicating the gear shift position of the vehicle 12 are displayed. Further, in a case in which a sensor installed at the vehicle 12 detects a target such as a preceding vehicle or an approaching vehicle, the dynamic display unit 60 displays target images 70, 72 in the vicinity of the first image 66. As an example, the first virtual viewpoint C1 has a display range around the vehicle 12 that is a range R1 of approximately 40 m ahead and approximately 3 m to the left, right, and rear.

Images of the host vehicle and targets are modeled as 3D data, and the dynamic display unit 60 is capable of displaying not only the host vehicle but also targets other than the host vehicle as three-dimensional images viewed from any virtual viewpoint.

Returning to Fig. 5, the second virtual viewpoint C2 is a virtual viewpoint set for the second driving mode (ACC mode). The second virtual viewpoint C2 is a viewpoint that is viewed from behind the first virtual viewpoint C1 and that is viewed from a lower position than the first virtual viewpoint C1. As an example, the viewpoint angle of the second virtual viewpoint C2 coincides with the direction of a line segment S2 passing through the viewpoint coordinates of the second virtual viewpoint C2 and the origin point O, and the rotation angle (pitch angle) θ2 around the Y axis is smaller than the rotation angle θ1 of the first virtual viewpoint C1. Therefore, the second virtual viewpoint C2 is a viewpoint that is oriented more upwardly than the first virtual viewpoint C1. The dynamic display unit 60 generates an image having a range R2 visible from the second virtual viewpoint C2 at a predetermined angle of view φ, and displays the image in a display area as an image showing the peripheral circumstances of the vehicle 12.

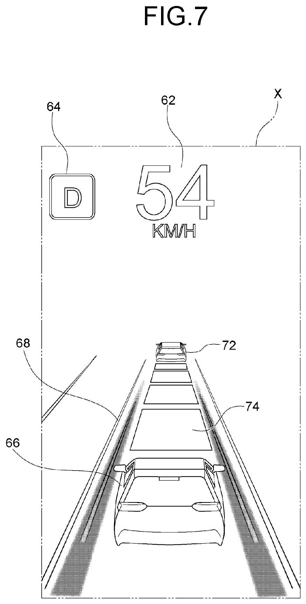

Fig. 7 is a display example of an image showing the peripheral circumstances of the vehicle 12 as seen from the second virtual viewpoint C2. As shown in this drawing, since the second virtual viewpoint C2 is a relatively upwardly-oriented viewpoint seen from a lower position than the first virtual viewpoint C1, the display range at the front side of the vehicle 12 is more extensive than that of the first virtual viewpoint C1. As an example, the display range around the vehicle 12 is a range R2 of approximately 110 m ahead and approximately 4 m to the left, right, and rear. In addition, the dynamic display unit 60 displays an image 74 indicating the operation of the second driving mode (ACC mode). The image 74 is configured by plural lines arranged in a stripe pattern between the target image 72 representing a preceding vehicle and the first image 66. The number of lines is increased or decreased depending on the inter-vehicle distance between the host vehicle and the vehicle ahead that is being tracked. For example, the configuration is such that in a case in which the inter-vehicle distance to the vehicle ahead decreases, the number of lines is reduced.

Returning to Fig. 5, the third virtual viewpoint C3 is a virtual viewpoint set for the third driving mode (ECO-ACC mode). The third virtual viewpoint C3 is a viewpoint seen from behind the first virtual viewpoint C1 and the second virtual viewpoint C2, and is a viewpoint seen from a lower position than the first virtual viewpoint C1 and a higher position than the second virtual viewpoint C2. As an example, the viewpoint angle of the third virtual viewpoint C3 coincides with that of the second virtual viewpoint C2. The dynamic display unit 60 generates an image having a range R3 visible from the third virtual viewpoint C3 at a predetermined angle of view φ, and displays the image in a display area as an image showing the peripheral circumstances of the vehicle 12.

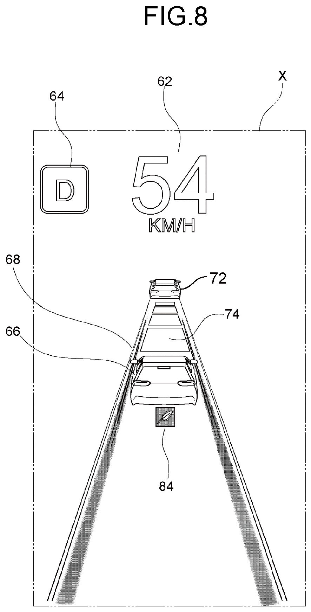

Fig. 8 is a display example of an image showing the peripheral circumstances of the vehicle 12 as seen from the third virtual viewpoint C3. Since the third virtual viewpoint C3 is a viewpoint seen from a high position further rearward than the first virtual viewpoint C1 and the second virtual viewpoint C2, the display range at the front, rear, left and right of the vehicle 12 is wider than those of the first virtual viewpoint C1 and the second virtual viewpoint C2. As an example, the display range around the vehicle 12 is a range R3 of approximately 120 m ahead and approximately 6 m to the left, right, and rear. Further, the dynamic display unit 60 displays a second image 84 indicating the operation of the third driving mode (ECO-ACC mode) in the area behind the first image 66. As an example, the second image 84 is configured by an image that resembles a plant leaf.

In the first to third virtual viewpoints C1 to C3 according to the embodiment, the virtual viewpoint set for driving modes with a relatively high level of automatic driving is set to a viewpoint that is as if viewed upwardly from a lower position than virtual viewpoints set for other driving modes with relatively low levels of automatic driving. That is, the second virtual viewpoint C2 and the third virtual viewpoint C3 are set as viewpoints that are as if viewed upwardly from a lower position than the first virtual viewpoint C1.

Here, in a case in which the driving mode of the vehicle 12 changes, the dynamic display unit 60 gradually changes the image displayed in the display area by changing the virtual viewpoint corresponding to the driving mode over a predetermined time period.

Further, the dynamic display unit 60 starts changing the virtual viewpoint after a predetermined time CT (s) has elapsed since the driving mode changed in the vehicle 12.

Furthermore, in a case in which it is determined that the length of the section that can be traveled in the changed driving mode is less than a threshold value D1 (m) based on the environmental information acquired by the environmental information acquisition unit 54, the dynamic display unit 60 displays the image without changing the virtual viewpoint. Here, a case in which the length of the section that can be traveled in the changed driving mode is less than the threshold value D1 (m) includes a case in which it is determined that there is a high possibility that the length of the section that can be traveled in the changed driving mode will be less than the threshold value D1 (m).

### (Display Example in case of Changing from First Driving Mode to Second Driving Mode)

As an example, a display example in a case in which the driving mode of the vehicle 12 changes from the first driving mode (manual driving mode) to the second driving mode (ACC mode) is explained. The dynamic display unit 60 changes the virtual viewpoint of the image displayed in the area X from the first virtual viewpoint C1 to the second virtual viewpoint C2 over the course of a first time Δt1 (s).

As shown in Fig. 5, in a case of changing from the first virtual viewpoint C1 to the second virtual viewpoint C2, the virtual viewpoint moves along a curved trajectory T1. The trajectory T1 is an arc-shaped trajectory extending rearward and downward. As a result, the virtual viewpoint of the image is configured to move from the first virtual viewpoint C1 to a viewpoint behind the second virtual viewpoint C2, and then move forward while rotating to reach the second virtual viewpoint C2. That is, the viewpoint coordinates move backward and downward on the XZ plane, and the viewpoint angle (direction of the virtual viewpoint) rotates upward around the Y axis.

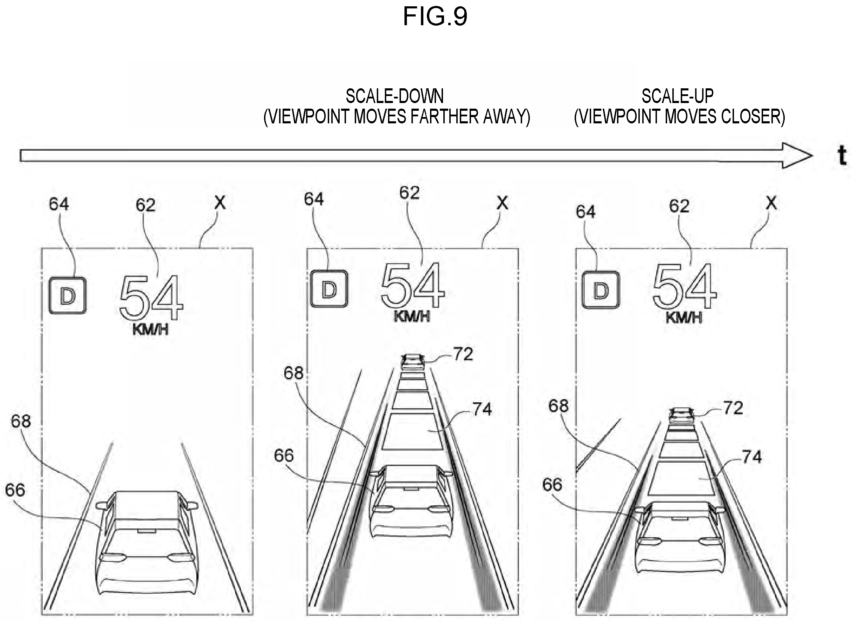

Fig. 9 is a diagram showing how the image in the display area (area X) gradually changes when the virtual viewpoint of the image changes from the first virtual viewpoint C1 to the second virtual viewpoint C2. As shown in this drawing, the image first scales down such that the viewpoint moves further away to the rear of the vehicle 12, and then scales up such that the viewpoint moves closer to the front. After the change in the virtual viewpoint, since the viewpoint is oriented further upward from a lower position as compared to before the change, a range farther ahead of the vehicle 12 is displayed in the display area.

Further, an image 74 indicating the operation of the second driving mode (ACC mode) is displayed between a target image 72 indicating a preceding vehicle and the first image 66, both before and after the change in the virtual viewpoint.

Since, by moving the virtual viewpoint along the curved trajectory T1, the viewpoint of the image moves significantly, a sense of dynamism can be imparted to the change in the image. As a result, the driver can intuitively recognize that the change from the first driving mode to the second driving mode has resulted in a change in the automatic driving level and a significant change in what is demanded of the driver.

In one example of the present embodiment, when the virtual viewpoint is moved along the trajectory T1, the movement speed forward is made slower than the movement speed backward. As a result, it is possible to enhance the sense of dynamism in the movement of the viewpoint in the initial stage of the image change, and to change the image slowly in the later stage of the image change.

### (Display Example in case of Changing from Second Driving Mode to Third Driving Mode)

As an example, a display example in a case in which the driving mode of the vehicle 12 changes from the second driving mode (ACC mode) to the third driving mode (ECO-ACC mode) is explained. For the virtual viewpoint of the image displayed in area X, the dynamic display unit 60 moves the coordinates corresponding to the image from the second virtual viewpoint C2 to the third virtual viewpoint over the course of a second time Δt2 that is shorter than the first time Δt1 (s).

As shown in Fig. 5, in a case of changing from the second virtual viewpoint C2 to the third virtual viewpoint C3, the virtual viewpoint moves along a straight-line trajectory T2. The trajectory T2 is a straight-line trajectory formed along the line segment S2.

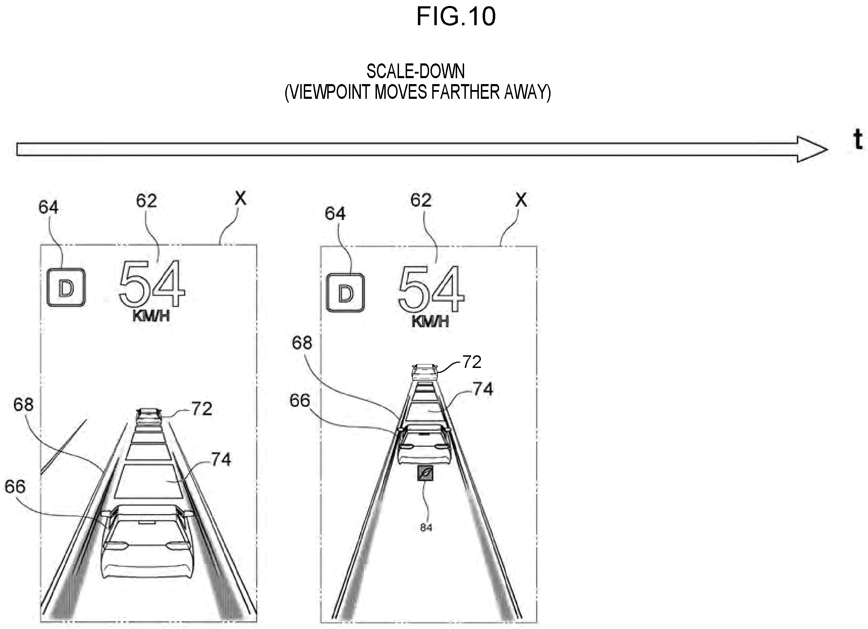

Fig. 10 is a diagram showing how the image in the display area (area X) gradually changes when the virtual viewpoint of the image changes from the second virtual viewpoint C2 to the third virtual viewpoint C3. As shown in this drawing, the image shrinks over the course of the second time Δt2 such that the viewpoint moves farther away to the rear side of the vehicle 12. As a result, it is possible to ensure space for displaying an image 84 indicating the operation of the third driving mode in the periphery of the first image 66 while controlling movement of the virtual viewpoint.

### (Display Example in case in which Warning is Displayed by Fourth Driving Mode During Operation of Second Driving Mode)

As an example, a case is explained in which a warning is displayed by the fourth driving mode (BSM function) while the driving mode of the vehicle 12 is operating in the second driving mode (ACC mode). After the driver operates a direction indicator, in a case in which a sensor of the vehicle 12 detects a vehicle approaching from the rear side, the dynamic display unit 60 changes the virtual viewpoint of the image in the display area (area X) from the second virtual viewpoint C2 to the third virtual viewpoint C3, and displays a warning.

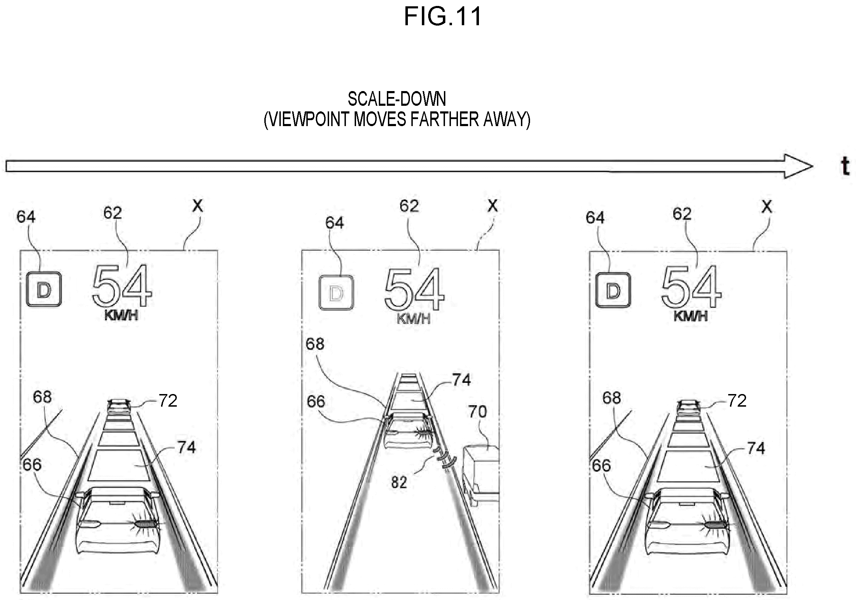

Fig. 11 is a diagram showing how the image gradually changes in a case in which a warning is displayed by the fourth operation mode (BSM function). As shown in this drawing, in the image, the indicator lights of the vehicle modeled by the first image 66 flash when the driver activates the direction indicator. Thereafter, the image is reduced such that the viewpoint moves farther away to the rear of the vehicle 12 over the course of the second time Δt2, and a warning image 82 is displayed behind the first image 66 showing the host vehicle. The warning image 82 is configured by plural wavy lines displayed between the first image 66 and a target image 70 indicating a vehicle approaching from the rear side. The warning image 82 may be configured by an animation of a wave moving from the first image 66 in the direction of the target image 70.

Here, in a case in which a warning is displayed by the fourth driving mode during operation in the first driving mode (manual driving mode), the virtual viewpoint of the image changes from the first virtual viewpoint C1 to the third virtual viewpoint C3, and the warning image 82 is displayed. Further, in a case in which a warning is displayed by the fourth driving mode during operation in the third driving mode (ECO-ACC mode), the virtual viewpoint does not change and the warning image 82 is displayed.

### (Mechanism)

Next, the mechanism of the present embodiment is explained.

### (Display Processing)

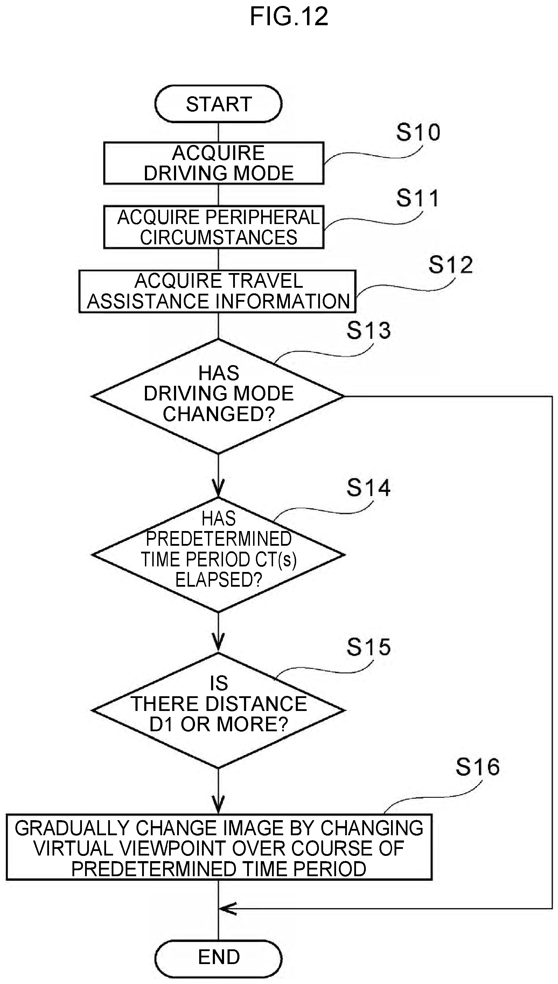

An example of display processing for displaying a predetermined image in the area X of the first display unit 24 configuring the meter display is explained with reference to the flowchart shown in Fig. 12. This display processing is performed by the CPU 30 reading out a display program from the ROM 32 or the storage 36, opening it in the RAM 34, and executing it.

The CPU 30 acquires the driving mode in step S10. Specifically, the CPU 30 acquires information regarding the driving mode of the vehicle 12 through the function of the driving mode acquisition unit 52.

The CPU 30 acquires the peripheral circumstances in step S11. Specifically, the CPU 30 acquires data relating to the peripheral circumstances of the vehicle 12 based on signals from sensors installed at the vehicle 12. Further, the CPU 30 acquires map information regarding the surroundings of the vehicle 12.

In step S12, the CPU 30 acquires information related to the operational status of travel assistance functions. For example, the CPU 30 acquires information related to the operational status of travel assistance functions based on information obtained from actuators such as a steering actuator, an accelerator actuator, and a brake actuator.

In step S13, the CPU 30 determines whether or not the driving mode of the vehicle 12 has changed. For example, the CPU 30 determines that the driving mode has changed in a case in which an operation requesting a change in the driving mode of the vehicle 12 has been received.

In step S14, the CPU 30 determines whether or not a predetermined time CT (s) has elapsed since the driving mode changed. If an operation requesting a change in a predetermined driving mode is received and then an operation requesting a change to another driving mode is not received within the predetermined time CT (s), it is determined that the predetermined time CT (s) has elapsed. If the determination in step S14 is affirmative, the processing proceeds to step S15. Further, if the determination in step S14 is negative, the CPU 30 ends the display processing.

In step S15, the CPU 30 determines whether or not the vehicle 12 is capable of traveling a predetermined distance D1 (m) or more in the driving mode set for the vehicle 12. For example, the CPU 30 refers to map information regarding the surroundings of the vehicle 12 and in a case in which the distance of a section that can be traveled in the current driving mode is equal to or greater than the predetermined distance D1 (m), the determination in step S15 is affirmative and the processing proceeds to step S16. Further, in a case in which the determination in step S15 is negative, the display processing is ended.

In step S16, the CPU 30 determines whether or not coordinates corresponding to the image of the area X are to be moved in conjunction with a change in the driving mode. For example, the CPU 30 refers to a data table in which plural preset driving modes are associated with virtual viewpoints in the virtual space, and in a case in which the corresponding virtual viewpoints before and after the change in driving mode are different, the determination in step S16 is positive. Further, in a case in which the determination in step S16 is negative, the display processing is ended.

In step S17, the CPU 30 gradually changes the image of the area X by changing the virtual viewpoint over a predetermined time period. Then, the CPU 30 ends the display processing.

As per the foregoing, in the vehicle display control system 10 configured by the vehicle display control device 28 according to the present embodiment, for plural pre-set driving modes, an image showing the peripheral circumstances of the vehicle 12 (host vehicle) as if viewed from a virtual viewpoint set according to the driving mode is displayed in display areas V1 to V3 in the surroundings of the driver's seat. Further, in a case in which the driving mode of the vehicle 12 changes, the image is gradually changed by moving the coordinates over the course of a predetermined time period. As a result, it becomes easier for the driver to notice the change in the image, and the change in driving mode can be displayed in a manner that is easy for the driver to recognize.

Specifically, the virtual viewpoint is set by setting a viewpoint in a virtual space in accordance with the driving mode. The vehicle display control device 28 can change the virtual viewpoint in the virtual space by at least one of moving the viewpoint coordinates of the virtual viewpoint or rotating the viewpoint angle (the orientation of the virtual viewpoint).

In the present embodiment, the first time Δt1 required for moving the virtual viewpoint in a case of changing from a first driving mode (manual driving mode) not having a travel assistance function to a second driving mode (ACC mode) or a third driving mode (ECO-ACC) having a travel assistance function, is set to be longer than the second time Δt2 required for changing from the second driving mode to the third driving mode. As a result, display is possible in a manner such that the greater the change in what is demanded of the driver in conjunction with the change in travel assistance, the more easily the occupant can recognize that the driving mode has changed.

Furthermore, in the present embodiment, in a case of changing from the first driving mode to the second driving mode, the dynamic display unit 60 moves the coordinates along the curved trajectory T1. As a result, the viewpoint of the image showing the peripheral circumstances of the vehicle 12 can be dynamically changed, and a change in driving mode can be displayed in a manner that is easily recognizable to the occupant.

Specifically, as shown in Fig. 5, the dynamic display unit 60 moves the first virtual viewpoint C1 to the second virtual viewpoint C2 (or the third virtual viewpoint C3) along the curved trajectory T1 that describes an arc. Therefore, the virtual viewpoint is configured to move farther away rearward of the vehicle 12, and then to move forward approaching the vehicle 12 and reach the second virtual viewpoint C2.

Further, the dynamic display unit 60 makes the speed of the forward movement of the coordinates slower than the speed of the backward movement of the coordinates. Therefore, by dynamically moving the virtual viewpoint at the initial stage of the image change, it becomes easier for the driver to notice the image change. Further, after the driver's line of sight is directed toward the image in the display area-that is, in the latter stage of the image change-the movement speed of the virtual viewpoint is slowed down. As a result, the driver is inhibited from feeling annoyance when looking at the display area.

Further, in the present embodiment, in a case in which the driving mode is changed from the second driving mode associated with travel assistance functions to the third driving mode that is also associated with travel assistance functions, the dynamic display unit 60 moves the coordinates along the straight-line trajectory T2. As a result, it possible to reduce the sense of dynamism compared to when the virtual viewpoint moves along the curved trajectory. As a result, the driver can intuitively recognize that the change in what is demanded of the driver in conjunction with the change in driving mode is relatively small.

Further, in the present embodiment, the dynamic display unit 60 changes the display range of the surroundings of the first image 66 showing the vehicle 12 in conjunction with changes in the virtual viewpoint. As a result, it is possible to ensure space for displaying other information in a predetermined range of the display area while, for example, changing the image, in accordance with the driving mode of the vehicle 12. As a result, the limited size of the display area can be efficiently used.

Specifically, in the present embodiment, the virtual viewpoint set for driving modes with a relatively high automatic driving level is set to a viewpoint that is as if viewed at a more upward orientation than virtual viewpoints set for other driving modes with relatively low automatic driving levels. Therefore, in a case in which the driving mode is changed from the first driving mode (automatic driving level 0) to the second driving mode or the third driving mode (automatic driving level 1), the virtual viewpoint is oriented further upward, and it is possible to display targets further ahead of the host vehicle in the display area. In this way, the display range in front of the first image 66 (host vehicle) can be increased as the automatic driving level rises.

Further, in the present embodiment, a virtual viewpoint set for driving modes with a relatively high automatic driving level is set to a viewpoint that is as if viewed from a lower position than virtual viewpoints set for other driving modes with relatively low levels of automatic driving. Therefore, in a case in which the driving mode is changed from the first driving mode (automatic driving level 0) to the second driving mode or the third driving mode (automatic driving level 1), the virtual viewpoint is lowered, and it is possible to display targets further ahead of the host vehicle in the display area. In this way, the display range in front of the first image 66 (host vehicle) can be increased as the automatic driving level rises.

Further, by increasing the display range around the vehicle, the driver can intuitively recognize the increase in the automatic driving level.

In the present embodiment, a change in the virtual viewpoint begins after a predetermined time CT (s) has elapsed since the driving mode of the vehicle 12 has changed. Therefore, since, in situations in which the driving mode changes in a short period of time, the viewpoint of the image can be kept unchanged, in a case in which the driving mode is frequently changed, the driver is inhibited from feeling annoyance when looking at the display area.

In the present embodiment, in a case in which it is determined that the length of the section that can be traveled in the changed driving mode is less than a threshold value, an image is displayed without moving the virtual viewpoint. Therefore, since, in a case in which it is predicted that the driving mode will change in a short section, the image can be displayed without changing the viewpoint, in a case in which it is predicted that the driving mode will frequently change, the driver is inhibited from feeling annoyance when looking at the display area.

### (Variant Examples)

In the above-described embodiment, since the orientation of the virtual viewpoint (viewpoint angle) is set to the direction of a line segment passing through the origin point O of the coordinate system and the viewpoint coordinates, the first image 66 showing the host vehicle is displayed at the center of the display area. However, the present disclosure is not limited to this. The virtual viewpoint can be configured with any given orientation in the virtual space, and is not limited to a display mode in which the first image 66 is displayed at the center of the display area.

For example, in the above-described embodiment, in a case in which a warning is displayed by the fourth driving mode, by moving the virtual viewpoint around to above an adjacent lane, a vehicle approaching the vehicle 12 from behind can be displayed at the center of the display area, effectively informing the driver of the presence of an approaching vehicle.

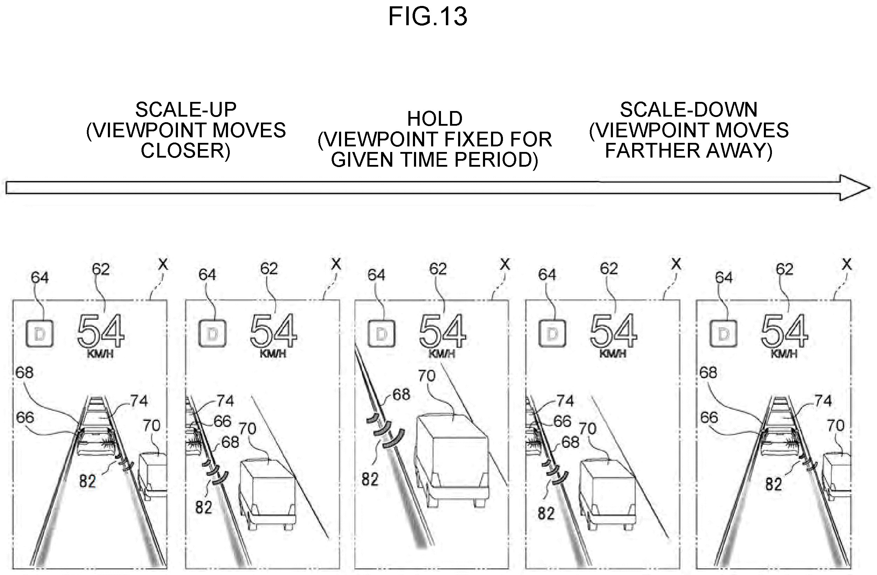

Further, this is not limited to a case of display of the warning by the fourth driving mode in the above-described embodiment, and in a case in which a vehicle warranting attention appears, such as a vehicle approaching from behind or a vehicle cutting in front, the virtual viewpoint may be brought closer to the target object of attention such that the target object is enlarged and displayed. In the example shown in Fig. 13, the warning image 82 is displayed between the first image and the target image 70 (vehicle warranting attention) at the virtual viewpoint C3 behind the host vehicle, then the virtual viewpoint is moved closer and the target image 70 is displayed in an enlarged state for a given time period, and then the viewpoint returns to the virtual viewpoint C3, and the warning is terminated. As a result, it is possible to inform the driver that the vehicle in question has been identified as a vehicle warranting attention. In this case, too, the image can be gradually enlarged over a predetermined time period, held, and then reduced in size again for display.

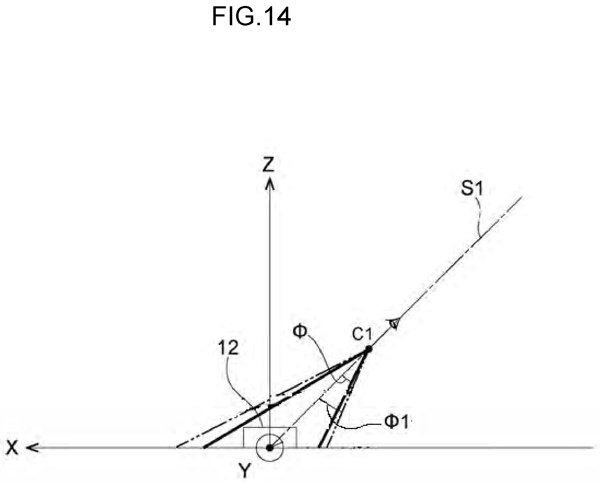

In the above-described embodiment, the dynamic display unit 60 is configured to change the virtual viewpoint by changing at least one of the viewpoint coordinates and the viewpoint angle in the virtual space, but there is no limitation to this. For example, the dynamic display unit 60 may change the angle of view φ over a predetermined time period without changing the virtual viewpoint, thereby gradually changing the image showing the peripheral circumstances of the host vehicle. For example, in a case in which the driving mode of the vehicle 12 changes from the first driving mode to the second driving mode, as shown in Fig. 14, the angle of view φ of the virtual viewpoint C1 may be increased to an angle of view φ1 over a predetermined time period. In this case, too, the display range of the surroundings of the host vehicle can be expanded, and a similar effect can be obtained. Further, in a case of changing to the third driving mode, a similar effect can be obtained by further widening the angle of view over a predetermined time period.

In the above-described embodiment, in a case in which the driving mode of the vehicle 12 changes from the first driving mode to the second driving mode (or the third driving mode), the configuration is such that the virtual viewpoint is changed by changing both the viewpoint coordinates and the viewpoint angle in the virtual space; however, there is no limitation to this. For example, the virtual viewpoint may be changed by rotating the orientation of the virtual viewpoint (viewpoint angle) upward while keeping the viewpoint coordinates fixed.

In the above-described embodiment, a case has been explained in which the host vehicle and its surroundings are displayed as three-dimensional image data based on a virtual viewpoint set in a three-dimensional virtual space; however, there is no limitation to this. A two-dimensional virtual viewpoint may be set, and the vehicle and its surroundings may be displayed as two-dimensional image data. In this case, the change in image accompanying the change in driving mode can be displayed by two-dimensional animation.

The processing performed by the CPU 30 reading the program in the embodiment described above may be performed various processors other than the CPU 30. Examples of such processors include a Programmable Logic Device (PLD) in which circuit configuration can be modified post-manufacture, such as a Field-Programmable Gate Array (FPGA), or a specialized electric circuit that is a processor with a specifically-designed circuit configuration for executing specific processing, such as an Application Spec Integrated Circuit (ASIC). Further, the processing described above may be executed by one of these various types of processors, or may be executed by combining two or more of the same type or different types of processors, such as plurals FPGAs, or a combination of a CPU and an FPGA, or the like. Further, a hardware configuration of the various processors is, more specifically, formed as an electric circuit combining circuit elements such as semiconductor element.

Further, in the above-described embodiment, the configuration is such that various data are stored in the storage 36; however, there is no limitation to this. A non-transitory recording medium such as, for example, a CD (Compact Disk), a DVD (Digital Versatile Disk), a USB (Universal Serial Bus) memory, or the like may be configured as the storage unit. In this case, various programs and data are stored in these recording media.

Further, the processing flows explained in the above-described embodiment are merely examples thereof, and unnecessary steps may be omitted, new steps added, or the processing sequence changed within a range not departing from the spirit thereof.

The disclosure of Japanese Patent Application No. 2023-143815 filed on September 5, 2023, is incorporated herein by reference in its entirety.

All publications, patent applications and technical standards mentioned herein are incorporated herein by reference to the same extent as if each individual publication, patent application and technical standard were specifically and individually indicated to be incorporated by reference.

## Claims

1. A vehicle display control device, which displays, at a display area provided in surroundings of a driver's seat, an image indicating peripheral circumstances of a host vehicle as if viewed from a virtual viewpoint configured in accordance with a driving mode thereof, for a plurality of preset driving modes, the device comprising:
a dynamic display unit that, in a case in which the driving mode of the host vehicle changes, gradually changes the image by changing the virtual viewpoint over the course of a predetermined time period.

2. The vehicle display control device of claim 1, wherein:
the virtual viewpoint is set by configuring a viewpoint corresponding to the driving mode in a virtual space, and
the virtual viewpoint is changed by at least one of moving coordinates of the virtual viewpoint, or rotating an orientation of the virtual viewpoint, in the virtual space.

3. The vehicle display control device of claim 1 or claim 2, wherein:
a first image indicating the host vehicle is included in the image, and
the dynamic display unit gradually changes a display range of surroundings of the first image in conjunction with a change in the virtual viewpoint.

4. The vehicle display control device of claim 1 or claim 2, wherein the dynamic display unit initiates a change in the virtual viewpoint after a predetermined time period elapses since the driving mode changes in the host vehicle.

5. The vehicle display control device of claim 1 or claim 2, wherein the dynamic display unit displays the image without changing the virtual viewpoint in a case in which it is determined, based on environmental information of the host vehicle, that a length of a section that can be traveled in a driving mode that has been changed is less than a threshold value.

6. The vehicle display control device of claim 1 or claim 2, wherein:
the plurality of preset driving modes includes:
a first driving mode that is not associated with a travel assistance function; and
a second driving mode and a third driving mode that are associated with at least one travel assistance function, and
the dynamic display unit changes the virtual viewpoint over the course of a first time period in a case in which the host vehicle changes from the first driving mode to the second driving mode, and changes the virtual viewpoint over the course of a second time period that is shorter than the first time period in a case in which the host vehicle changes from the second driving mode to the third driving mode.

7. The vehicle display control device of claim 6, wherein the dynamic display unit moves the virtual viewpoint along a curved trajectory in a case in which the host vehicle changes from the first driving mode to the second driving mode.

8. The vehicle display control device of claim 7, wherein:
a first virtual viewpoint corresponding to the first driving mode and a second virtual viewpoint corresponding to the second driving mode are configured, and
the dynamic display unit is configured such that, by moving the virtual viewpoint along an arcuate trajectory directed rearward and to a lower side in a case in which the host vehicle changes from the first driving mode to the second driving mode, the virtual viewpoint arrives at the second virtual viewpoint by moving forward after having moved further rearward than the second viewpoint from the first virtual viewpoint.

9. The vehicle display control device of claim 8, wherein the dynamic display unit makes a speed of forward movement of the virtual viewpoint slower than a speed of rearward movement thereof.

10. The vehicle display control device of claim 6, wherein the dynamic display unit moves the virtual viewpoint along a straight-line trajectory in a case in which the host vehicle changes from the second driving mode to the third driving mode.

11. The vehicle display control device of claim 6, wherein:
the second driving mode is associated with a travel assistance function that is at least one of acceleration/deceleration or steering, and
the dynamic display unit changes the image so as to expand a display range at a forward side of a first image in a case in which the host vehicle changes to the second driving mode.

12. The vehicle display control device of claim 6, wherein:
the third driving mode is associated with a travel assistance function that controls an output of a power unit and improves travel efficiency of the host vehicle as compared to during travel in the second driving mode,
a first image indicating the host vehicle is included in the image, and
in a case in which the host vehicle changes to the third driving mode, the dynamic display unit changes the image such that a display range expands in a predetermined direction of surroundings of the first image, and displays a second image identifying the third driving mode at a side in the predetermined direction of surroundings of the first image.

13. The vehicle display control device of claim 1 or claim 2, wherein the virtual viewpoint that has been configured for a driving mode having a relatively high automatic driving level is set at a viewpoint that is as if viewed with a more upward orientation than the virtual viewpoint that has been configured for another driving mode having a relatively low automatic driving level.

14. The vehicle display control device of claim 1 or claim 2, wherein the virtual viewpoint that has been configured for a driving mode having a relatively high automatic driving level is set at viewpoint that is as if viewed from a lower position than the virtual viewpoint that has been configured for another driving mode having a relatively low automatic driving level.

15. A method of vehicle display control that displays, at a display area provided in surroundings of a driver's seat, an image indicating peripheral circumstances of a host vehicle as if viewed from a virtual viewpoint configured in accordance with a driving mode thereof, for a plurality of preset driving modes, the method comprising:
in a case in which the driving mode of the host vehicle changes, gradually changing the image by changing the virtual viewpoint over the course of a predetermined time period.

16. A program that causes a computer to execute processing that displays, at a display area provided in surroundings of a driver's seat, an image indicating peripheral circumstances of a host vehicle as if viewed from a virtual viewpoint configured in accordance with a driving mode thereof, for a plurality of preset driving modes, the processing comprising:
in a case in which the driving mode of the host vehicle changes, gradually changing the image by changing the virtual viewpoint over the course of a predetermined time period.
